# EUROPEAN PATENT APPLICATION

(11) **EP 4 843 741 A1**
(43) Date of publication of application: **25.11.2026**
(21) Application number: 26177907.8
(22) Date of filing: 11.05.2026
(51) Int. Cl.: B29C 44/32

(54) **METHOD OF PRODUCING AN INSULATION PANEL**

(30) Priority: 20.05.2025 BE 202505319
(71) Applicant: Unilin, BV, 8710 Wielsbeke (BE)
(72) Inventor: BEERENS, Brecht, 8710 Wielsbeke (BE); DEGRANDE, Kevin, 8710 Wielsbeke (BE)
(74) Representative: Unilin Technologies

(57) **Abstract**

A liquid polyurethane foam formulation (18) is deposited in discrete quantities across the width onto a foil (14). These discrete quantities of liquid polyurethane foam formulation have flown together after a distance (D1) so that the foil (14) is wetted without interruption in the direction transversely to the production direction. Upstream of an oven, a second foil (16) is supplied from above, wherein the foil (14) with the polyurethane foam thereon and the second foil (16) are guided through the oven. The height position of the second foil (16) is determined by guiding the second foil (16) under a roller (53). The roller (53) is pressing on the polyurethane foam, reducing the height of the polyurethane foam at the position of the roller (53).

## Description

This invention relates to a method for producing an insulation panel made of rigid polyurethane foam, for example made of polyisocyanurate (PIR) foam.

WO2022/047102 describes a method for producing an insulation panel made of polyisocyanurate.

EP1790452A2 describes a rigid polymer insulation foam board with an upper facer, a lower facer, and a foam layer between the upper and lower facers. After laying a liquid foam formulation, the foam sandwich is led into an oven, and the continuous foam board leaving the oven is led through a curing station. The foam sheet is cut to a length.

EP4385702A1 describes a method for producing a polyisocyanurate insulation panel. The produced insulation panel comprises polyisocyanurate foam between two foils. A liquid polyisocyanurate foam formulation is deposited on a foil so that, at the position where the liquid foam formulation is deposited on the foil, the foil is moistened in an uninterrupted manner in the direction at right angles to the direction of production. The foil is supported by a heated table at the position where the liquid foam formulation is deposited onto the foil. The liquid polyisocyanurate foam formulation reacts to form a polyisocyanurate foam which is bonded to the foil.

WO2020/076529A1 and WO2020/076539A1 describe examples of polyisocyanurate foam formulations that can be used to produce insulation panels from polyisocyanurate foam.

In the production of rigid polyurethane foam insulation panels, a liquid polyurethane foam formulation is used. Liquid polyurethane foam formulation means that this is a liquid that comprises the reagents for the formation of a polyurethane foam. The liquid polyurethane foam formulation comprises polyol, a diisocyanate, and one or more blowing agents, catalysts, silicones, flame retardants, and water. In the production process, the polyol reacts with the diisocyanate to form a rigid foam.

Polyisocyanurate foam is a specific rigid polyurethane foam obtained by using specific liquid polyurethane foam formulations, and wherein during the production isocyanurate groups are formed in the foam.

It is a specific objective of the invention to develop a production method for rigid polyurethane foam insulation panels - for example, rigid polyisocyanurate foam insulation panels - that are of good consistent quality, that have good and durable thermal insulation properties, that have an attractive aesthetic appearance, and that have good compressive strength in the thickness direction of the board and in the length and width directions of the board.

The first aspect of the invention is a method for producing a rigid polyurethane foam insulation panel on a production line, wherein the produced insulation panel comprises a rigid polyurethane foam between two foils. The method comprises the step wherein a liquid polyurethane foam formulation is deposited onto a foil such that, at the position where the liquid polyurethane formulation is deposited onto the foil, the foil is wetted by discrete quantities of the liquid polyurethane foam formulation in the direction transversely to the production direction. At a distance from the position where the liquid polyurethane formulation is deposited onto the foil the discrete quantities will have flown together, in order to wet the foil with the liquid polyurethane foam formulation without interruption in the direction transversely to the production direction. Upstream of an oven, a second foil is supplied above the foil with the polyurethane foam thereon. The foil with the polyurethane foam thereon and the second foil are guided through the oven. In the method, the liquid polyurethane foam formulation expands and reacts to form a polyurethane foam bonded to and sandwiched between the foil and the second foil. The height position of running in the second foil is determined by guiding the second foil under a roller, wherein the roller is pressing on the polyurethane foam. This pressing reduces the height of the polyurethane foam at the position of the roller.

With this method, insulation panels with good insulation properties, good compressive strength, and an attractive and uniform surface are obtained. Allowing the liquid polyurethane foam formulation to flow together only after a certain distance ensures that foam cells can be formed in the direction transversely to the production direction. This is advantageous for the thermal insulation value of the insulation panel and for the compressive strength in the width direction of the insulation panel. Because the roller reduces the foam height before the foam is guided into the oven, the foam is distributed better across the width. This results in a more homogeneous composition of the board and ensures a more uniform adhesion of the second foil to the polyurethane foam in the insulation panel. The timely flowing together of the liquid polyurethane formulation across the width of the foil ensures a good and uniform adhesion of the foam to the first foil. A good and uniform adhesion means that a visually more attractive panel is obtained. In addition, channels between the foil and the foam, and between the second foil and the foam, are avoided. Such channels would cause a faster aging of the insulation value of the polyurethane foam insulation panel.

Compressing the foam at the roller also ensures that the foam cells orient themselves less in a direction of thickness but more in a transverse direction. This is advantageous for the insulation value of the insulation panel.

Preferably, the discrete quantities of liquid polyurethane foam formulation have flown together before reaching the roller, in order to wet the foil with the liquid polyurethane foam formulation in the direction transversely to the production direction without interruptions.

This embodiment further improves the uniform distribution and expansion of the foam formulation, which means an insulation panel with a better combination of properties is obtained.

The roller compresses the polyurethane foam by at least 1 mm - and preferably by at least 3 mm, and more preferably by at least 4 mm - relative to the average height of the polyurethane foam in front of the roller. This has the advantage that at the roller a good leveling of the upper side of the foam is obtained. This leveling is performed at the roller, so that air between the waves in a width direction of the foam is removed. This avoids cracks and fracture lines in the finally formed polyurethane foam. This is advantageous for achieving a good combination of properties of the insulation panel, especially with regard to uniform adhesion of the second foil to the foam, the strength of the panel, and a good insulation value during aging of the polyurethane foam insulation panel.

When producing polyurethane foam panels of at most 100 mm, it is sufficient for the roller to compress the polyurethane foam between 1 mm and 1.3 mm relative to the average height of the polyurethane foam in front of the roller.

When producing polyurethane foam panels of at least 150 mm, the roller compresses the polyurethane foam preferably by at least 1 mm relative to the average height of the polyurethane foam in front of the roller.

Preferably, the height position of the roller is controlled by means of a control loop as a function of a measurement of the height of the polyurethane foam in front of the position of the roller. This makes it possible to continuously produce insulation panels with good properties.

The height measurement can be performed across the width by means of an optical measurement, preferably using a laser.

Preferably, after the roller the thickness of the polyurethane foam still increases by at least 35% - and preferably by at least 50% - of the final thickness of the polyurethane foam insulation panel.

This allows the foam to flow together well at the roller. After the leveling of the foam at the roller, the foam can expand still further from an even distribution across the width of the foam. This ensures a uniform foam formation; and finally an attractive, level upper surface of the foam. In addition, fracture lines in a transverse direction in the upper side of the foam are avoided.

The polyurethane foam preferably has a wavy surface just in front of the position where the roller is pressing on the polyurethane foam, viewed transversely to the production direction.

The roller can ensure leveling of the upper surface of the foam. The wavy surface of the foam in front of the roller can be a result of the distance the foam requires to flow together, so that the foam wets the foil without interruptions across the width of the foil. This distance may be relatively important, resulting in an wavy upper surface at the roller, in order to be able to obtain important expansion of the foam in a transverse direction. This is advantageous for the thermal insulation value of the polyurethane foam insulation panel.

Preferably, the foil is supported by a heated table at the position where the liquid polyurethane foam formulation is deposited onto the foil. This ensures a heating of the foam and the timely and proper fixation of the foam to the foil.

Preferably, the heated table has a temperature of at least 70°C at the roller, and preferably at most 75°C. These embodiments have the advantage that the chemical reactions in the foam (foaming reactions and polymerization reactions) can proceed appropriately in the oven.

Preferably, from the roller the polyurethane foam contacts the second foil across its entire width. This has the advantage that the foam can continue to expand uniformly, and that channels between the foam and the second foil in the insulation panel van be avoided even better.

Preferably, the horizontal distance between the roller and the oven entrance is less than 25% - and preferably more than 10% - of the horizontal distance between the position where the liquid polyurethane formulation is deposited onto the foil and the oven entrance. This facilitates obtaining a good combination of properties of the insulation panel.

The second aspect of the invention is a method for producing a rigid polyurethane foam insulation panel on a production line, wherein the produced insulation panel comprises a rigid polyurethane foam between two foils. The method comprises the step wherein a liquid polyurethane foam formulation is deposited onto a foil such that, at the position where the liquid polyurethane formulation is deposited onto the foil, the foil is wetted by discrete quantities of the liquid polyurethane foam formulation in the direction transversely to the production direction. At a distance from the position where the liquid polyurethane formulation is deposited onto the foil the discrete quantities will have flown together, in order to wet the foil with the liquid polyurethane foam formulation without interruption in the direction transversely to the production direction. Upstream of an oven, a second foil is supplied above the foil with the polyurethane foam thereon. The foil with the polyurethane foam thereon and the second foil are guided through the oven. In the method, the liquid polyurethane foam formulation expands and reacts to form a polyurethane foam bonded to and sandwiched between the foil and the second foil. The table supporting the foil onto which the liquid polyurethane foam formulation is deposited, is arranged inclined in the production direction.

With this method, insulation panels with good insulation properties, good compressive strength, and an attractive and uniform surface are obtained. Allowing the liquid polyurethane foam formulation to flow together only after a certain distance ensures that foam cells can be formed in the direction transversely to the production direction. This is advantageous for the thermal insulation value of the insulation panel and for the compressive strength in the width direction of the insulation panel. The timely flowing together of the liquid polyurethane formulation across the width of the foil ensures a good and uniform adhesion of the foam to the foil. A good and uniform adhesion means that a visually more attractive panel is obtained. In addition, channels between the foil and the foam are avoided. Such channels would cause a faster aging of the insulation value of the polyurethane foam insulation panel. The inclination of the table ensures, due to the effects of gravity, an increased flow of the liquid polyurethane foam formulation. This facilitates the flowing together of the discrete quantities of liquid foam formulation, so that it is easier for this flowing together to occur timely.

It has been found that arranging the table inclined is especially interesting in the production of polyurethane insulation panels with a thickness of less than 105 mm, and more preferably with a thickness of less than 80 mm.

The height position of running in the second foil is preferably determined by guiding the second foil under a roller. More preferably, the roller is pressing on the polyurethane foam. This pressing reduces the height of the polyurethane foam at the position of the roller.

Preferably, the table supporting the foil is arranged inclined upwardly in the production direction. The angle of inclination is preferably at least 3°, more preferably at least 5°, and more preferably less than 15°. These embodiments can facilitate the timely flowing together of the liquid polyurethane foam formulation in a transverse direction.

A preferred embodiment is characterized in that the table supporting the foil is arranged inclined over at least part of the length - and preferably over the entire length - between the position where the liquid polyurethane foam formulation is deposited onto the foil and the oven.

A preferred embodiment is characterized in that the table supporting the foil is arranged inclined upwardly in the production direction over at least part of the length - and preferably over the entire length - between the position where the liquid polyurethane foam formulation is deposited onto the foil and the oven.

The method according to the second aspect of the invention is preferably a method according to any embodiment of the method of the first aspect of the invention.

The third aspect of the invention is a method for producing a rigid polyurethane foam insulation panel on a production line, wherein the produced insulation panel comprises a rigid polyurethane foam between two foils. The method comprises the step wherein a liquid polyurethane foam formulation is deposited onto a foil such that, at the position where the liquid polyurethane formulation is deposited onto the foil, the foil is wetted by discrete quantities of the liquid polyurethane foam formulation in the direction transversely to the production direction. At a distance from the position where the liquid polyurethane formulation is deposited onto the foil the discrete quantities will have flown together, in order to wet the foil with the liquid polyurethane foam formulation without interruption in the direction transversely to the production direction. Upstream of an oven, a second foil is supplied above the foil with the polyurethane foam thereon. The foil with the polyurethane foam thereon and the second foil are guided through the oven. In the method, the liquid polyurethane foam formulation expands and reacts to form a polyurethane foam bonded to and sandwiched between the foil and the second foil. The liquid polyurethane foam formulation flows transversely to the production direction of the polyurethane panel out of a discrete number of nozzles which deposit it onto the foil. The nozzles are directed upstream and positioned at an angle to the vertical direction, so that the liquid polyurethane foam formulation is sprayed onto the foil in the direction upstream of the production direction.

With this method, insulation panels with good insulation properties, good compressive strength, and an attractive and uniform surface are obtained. Allowing the liquid polyurethane foam formulation to flow together only after a certain distance ensures that foam cells can be formed in the direction transversely to the production direction. This is advantageous for the thermal insulation value of the insulation panel and for the compressive strength in the width direction of the insulation panel. The timely flowing together of the liquid polyurethane formulation across the width of the foil ensures a good and uniform adhesion of the foam to the foil. A good and uniform adhesion means that a visually more attractive panel is obtained. In addition, channels between the foil and the foam are avoided. Such channels would cause a faster aging of the insulation value of the polyurethane foam insulation panel. The inventors have surprisingly established positioning through which the liquid polyurethane foam formulation is sprayed onto the foil inclined in the direction upstream of the production direction, initially already causes the flows out of the nozzle onto the foil to be broader, and that the discrete quantities of liquid polyurethane foam formulation flow together more easily at a distance from the position where the foam is deposited.

Preferably, the angle of the nozzles with respect to the vertical direction is at least 5°, and preferably less than 30°.

An angle of the nozzles relative to the vertical direction that is too steep, could lead to the formation of cells in the foam that are too big.

The method according to the third aspect of the invention is preferably a method according to any embodiment of the method of the first aspect of the invention and/or according to any embodiment of the method of the second aspect of the invention.

The following describes preferred embodiments which can be employed in the method of the first aspect of the invention, and/or in the method of the second aspect of the invention, and/or in the method of the third aspect of the invention.

Preferably, the distance from the position of depositing the liquid polyurethane foam formulation onto the foil to the position where the discrete quantities have flown together to wet the foil with the liquid polyurethane foam formulation without interruptions in the direction transversely to the production direction is at least 250 mm, and preferably at least 300 mm, and preferably less than 500 mm.

These embodiments ensure that sufficient expansion of the foam occurs in a transverse direction, so that a good thermal insulation value of the insulation foam is obtained. However, this flowing together should not occur too late, in order to avoid that the formed foam is non-uniform in a transverse direction.

These embodiments also ensure that the foam is adhering to the foil sufficiently quickly and uniformly across the width of the foam. This also avoids folds in the foil in the formed insulation panel.

Preferably, the expansion of the foam does not start until 0.6 * the distance from the position of depositing the liquid polyurethane foam formulation onto the foil to the position where the discrete quantities have flown together to wet the foil with the liquid polyurethane foam formulation without interruptions in the direction transversely to the production direction. This has the advantage that correctly dimensioned cells can be formed in the foam.

This embodiment can be obtained by appropriately adjusting the cream time of the liquid polyurethane foam formulation. The cream time of the liquid polyurethane foam formulation can be adjusted by a suitable selection of catalysts in the liquid polyurethane foam formulation.

The cream time is defined as the time that elapses between the time of depositing the liquid foam formulation and the start of the expansion of the foam. The expansion of the foam occurs through the formation of carbon dioxide (by the reaction of water with isocyanate groups) and through the presence of blowing agents (for example pentane) in the liquid foam formulation.

Carbon dioxide can be formed by the reaction of water with isocyanate in the polyurethane foam formulation. Carbon dioxide functions as a blowing agent. The exothermic reaction is furthermore favorable for increasing the temperature so that chemical reactions can occur in the foam.

In addition to the cream time, the fiber time is of importance in the production of polyurethane foam. The fiber time is the time that elapses between the time of the deposition of the liquid polyurethane foam formulation and the time at which polymerization occurs in the foam as a result of the formation of urethane compounds through hydroxyl groups reacting with isocyanate groups.

The cream time (also called gel time) and the fiber time can be determined according to ASTM D7487-18 "Standard for measuring both cream time (initiation time) and gel time in the production of polyurethane foams".

The fiber time and cream time of a liquid polyurethane foam formulation depend on the specific polyurethane foam formulation, among other things on the catalysts used and the quantity of catalysts. The selection of the catalysts and their quantities allows the expert to adjust the fiber time and cream time of a liquid polyurethane foam formulation.

Preferably, the liquid polyurethane foam formulation flows out of a discrete number of nozzles, transversely to the production direction of the polyurethane panel, and is deposited onto the foil by them. The nozzles allow the liquid polyurethane foam formulation to be correctly positioned and distributed across the width.

The distance between the centers of any two consecutive nozzles preferably is at least 85 mm when producing insulation panels with a thickness of at least 100 mm. This ensures a suitable distribution of the liquid polyurethane foam formulation across the width to obtain a polyurethane insulation panel with a very good combination of properties.

The distance between the centers of any two consecutive nozzles preferably is at least 40 mm and preferably less than 85 mm - and more preferably less than 65 mm - when producing insulation panels with a thickness of less than 80 mm. This ensures a suitable distribution of the liquid polyurethane foam formulation across the width to obtain a polyurethane insulation panel with a very good combination of properties.

The method preferably employs a number of spray units positioned across the width of the production line to produce the polyurethane insulation panel, each spray unit comprising a central feed channel for supplying the liquid polyurethane foam formulation; the central feed channel ending in a transverse distribution channel which directs the liquid polyurethane foam formulation to a discrete number of nozzles, either indirectly or directly.

Such embodiments allow the liquid polyurethane foam formulation to be evenly distributed over a number of nozzles in an efficient manner. This ensures better uniformity of the properties of the polyurethane insulation panel.

Each spray unit may contain a number of spray channels, positioned transversely to the transverse distribution channel, each spray channel directing a separate flow of the liquid polyurethane foam formulation from the transverse distribution channel to a nozzle, with the length of the spray channels decreasing from spray channels ending in a centrally positioned nozzle or the centrally positioned nozzles to the spray channels ending in the most distal nozzles relative to the central feed channel.

Such embodiments have the advantage that a same quantity of the liquid polyurethane foam formulation is flowing out of the various nozzles of the spray unit. This ensures a good uniformity of the polyurethane insulation panel.

Each of the spray units may comprise a second transverse distribution channel, the second transverse distribution channel running parallel to the transverse distribution channel and being connected thereto through a number of connection channels, wherein the liquid polyurethane foam formulation can flow from the transverse distribution channel into the second transverse distribution channel through the connection channels, the connection channels being positioned transversely relative to the transverse distribution channel, wherein the discrete number of nozzles are positioned along the length of the second transverse distribution channel, each nozzle being connected to the second transverse distribution channel through a spray channel, positioned transversely to the second transverse distribution channel, wherein in each case two spray channels are arranged symmetrically with respect to each connection channel.

This embodiment has the advantage that from the various nozzles of the spray unit a same quantity of the liquid polyurethane foam formulation is flowing. This ensures a good uniformity of the polyurethane insulation panel. The second transverse distribution channel ensures that a same quantity of the liquid polyurethane foam formulation is flowing from the various nozzles.

More preferably, in each case two connection channels are arranged symmetrically with respect to the central feed channel. This ensures an even better uniform distribution of the liquid polyurethane foam formulation across the various nozzles of the spray unit.

The nozzles may have a circular outflow opening. This has the advantage of better preventing partial or complete blockage of nozzles; this is advantageous for obtaining polyurethane insulation panels with homogeneous properties.

The nozzles may have an oval outflow opening, preferably with the largest dimension in the direction perpendicular to the production direction. Such embodiments have the advantage that broader flows of the liquid foam formulation are deposited.

Preferably, each spray unit comprises one or more plastic injection molded parts.

Preferably, each spray unit is composed of one or more plastic injection molded parts.

Preferably, the foil is supported by a heated table at the position where the liquid polyurethane foam formulation is deposited onto the foil. This has the advantage that the deposited liquid polyurethane foam formulation is heated after depositing. This accelerates the chemical reactions in the foam and also ensures rapid adhesion of the foam to the foil.

More preferably, the heated table has a temperature of at least 30°C and preferably of less than 50°C, and more preferably of at least 40°C at the position where the liquid polyurethane foam formulation is deposited onto the foil.

These embodiments synergistically ensure production of a polyurethane insulation panel with a good combination of properties, as well as a good adhesion of the foam to the foil.

Preferably, the heated table comprises at least three sections in the production direction; and more preferably at least five sections; and even more preferably at least six sections. In these sections, the temperature can be adjusted individually.

This has the advantage that the temperature of the heated table can be adjusted to increase in the production direction. This ensures that the chemical reactions in the polyurethane foam are appropriately controlled. This ensures good adhesion of the foam to the foil. In general, this results in an insulation panel with a good combination of properties.

More preferably, sensors and control loops are used in the method in order to measure the temperature in each of these sections and to control it relative to the desired temperature in the respective section.

These embodiments ensure homogeneous and consistent properties of the insulation panel.

The temperature of the sections is preferably adjusted to increase in the production direction. Preferably, the temperature is adjusted to increase over at least four, and preferably over at least five sections. This synergistically ensures better reactions of the polyurethane foam, so that an insulation panel with a better combination of properties is obtained synergistically.

Preferably, the temperature in the last section of the heated table is less than 5°C lower than the temperature in the oven. Preferably, the temperature in the last section of the heated table is adjusted to be equal to the temperature of the oven. This ensures the chemical reactions in the foam are running properly, so that a higher quality insulation panel can be obtained. In addition, the production speed of the production line can be maximized.

Preferably, the temperature in the last section of the heated table is higher than 70°C and lower than 85°C, and preferably higher than 73°C. This ensures that the production speed of the production line can be maximized.

A preferred embodiment of the method is characterized in that the last section of the heated table in front of the oven, in the direction transversely to the production direction, comprises three subsections, wherein the temperature in each of these subsections can be adjusted individually.

This allows the temperature of the heated table in the last sections to be adjusted and/or regulated across the width. This allows for an even better control of the properties and the visual aspect of the polyurethane insulation panel, so that an even more uniform polyurethane insulation panel can be obtained.

A preferred embodiment of the method is characterized in that at least the last three sections of the heated table in front of the oven each comprise three subsections in the direction transversely to the production direction, wherein the temperature in each of these subsections can be adjusted and regulated individually. This allows the temperature of the heated table in these last sections to be adjusted and/or regulated across the width. This allows for an even better control of the properties and the visual aspect of the insulation panel.

More preferably, these three subsections comprise a central section and two edge sections, the central section being at least twice as wide as each of the two edge sections. This is advantageous since during the production of the insulation panel edge effects could occur at the edges. Control of the temperature in these edge sections of the heated table makes it possible to reduce or even prevent edge effects in the polyurethane insulation panel, resulting in an insulation panel with even more uniform properties.

A preferred embodiment of the method is characterized in that the method uses sensors and control loops to measure the temperature in each of the three subsections and to regulate it relative to the desired temperature.

This is advantageous even in embodiments where the desired temperature in subsections is the same. The individual regulation then ensures that the desired temperature is effectively reached and maintained, resulting in a higher quality and more uniform polyurethane insulation panel.

A preferred embodiment of the method is characterized in that temperatures in all subsections which transversely to the production direction are intersected by the same line, are adjusted to be the same. The individual regulation then ensures that the desired temperature is effectively reached and maintained, resulting in a higher quality and more uniform polyurethane insulation panel.

Preferably, the foil with the polyurethane foam thereon and the second foil are guided through the oven by means of and between a double conveyor.

The foil with the polyurethane foam thereon and the second foil are guided through the oven by means of and between a double conveyor. In the method, the liquid polyurethane foam formulation expands and reacts to form a polyurethane foam bonded to and sandwiched between the foil and the second foil.

The foil is preferably fed continuously through the production line in the production direction of the polyurethane panel.

A preferred embodiment is characterized in that the discrete quantities each form two bulges, at the position where the discrete quantities have flown together in order to wet the foil with the liquid polyurethane foam formulation without interruption in the direction transversely to the production direction.

This embodiment has the advantage that the liquid polyurethane foam formulation is already better distributed across the width at this position, and furthermore that a uniform foam can be produced more easily. This embodiment can be realized by an appropriate adjustment of the viscosity of the liquid polyurethane foam formulation and a suitably upstream orienting of the nozzles that deposit the liquid polyurethane foam formulation onto the first foil.

More preferably, in embodiments where the height position of running in the second foil is determined by guiding the second foil under a roller; the roller pressing on the polyurethane foam, wherein this pressing reduces the height of the polyurethane foam at the position of the roller, there are, just in front of the roller, two bulges for each originally deposited discrete quantity of the liquid polyurethane foam formulation.

Preferably, on both sides of the foil a paper strip is fed in alongside the foil, wherein the paper strip is attached to the foil on both sides by means of adhesive tape or glue (for example, a hot melt adhesive), wherein in this method the paper strips on both sides are folded into a vertical position, wherein the polyurethane foam will adhere to these vertically oriented paper strips, and wherein these paper strips are forming the side edges of the produced polyurethane insulation panel.

This embodiment has the advantage that the sides of the insulation panel are also formed correctly Additionally, the paper strips ensure that no liquid polyurethane foam formulation is deposited on or can flow onto the heated table. This is best avoided, since the foam would stick to this heated table. Furthermore, the insulation panel might not contain the correct quantity of material.

In one embodiment, the foil is or comprises a sheet of aluminum. More preferably, the sheet of aluminum has a thickness of more than 40 micrometers, and more preferably of less than 75 micrometers, more preferably of less than 60 micrometers.

In one embodiment the foil is a laminate, the laminate comprising:
- a plastic film - preferably on the outer side of the laminate and preferably to form the outer surface of the insulation panel -;
- one or more aluminum sheets, wherein each aluminum sheet is at least 5 micrometers thick, and preferably less than 20 micrometers thick; and
- one or more layers of paper, preferably layers of Kraft paper.

The plastic film can be, for example, a polyethylene foil or a polyvinylidene film.

Preferably, the second foil has the same composition and structure as the foil.

A preferred embodiment is characterized in that the liquid polyurethane foam formulation comprises at least
- a polyol, preferably wherein the polyol has a functionality of at least 2;
- a diisocyanate;
- a blowing agent, the blowing agent comprising water and an additional blowing agent, for example pentane;
- a surfactant, for example a silicone surfactant and/or a non-silicone surfactant;
- a catalyst;
- optionally additives, for example flame retardant additives.

Such embodiments allow production of high-quality polyurethane insulation panels according to the method of the invention.

The method can be a method for producing a polyisocyanurate foam insulation panel, wherein the liquid polyurethane foam formulation is a liquid polyisocyanurate foam formulation.

A liquid polyisocyanurate formulation for a method for producing a polyisocyanurate foam insulation panel according to the invention may comprise at least:
- a polyester polyol, preferably wherein the polyester polyol has a hydroxyl number between 150 and 600 mg KOH/gram and a functionality of at least 2;
- polymeric methylene diphenyl diisocyanate (pMDI);
- a blowing agent, the blowing agent comprising water and an additional blowing agent, for example pentane;
- a surfactant, for example a silicone surfactant and/or a non-silicone surfactant;
- a catalyst;
- optionally additives, for example flame retardant additives;
wherein the mass ratio of the polymeric methylene diphenyl diisocyanate to the polyester polyol is at least 1.9.

Such embodiments allow the production of high-quality polyisocyanurate insulation panels in the method of the invention.

More preferably, at least 85 weight percent - and preferably at least 90 weight percent - of the liquid polyisocyanurate foam formulation is comprised of the combination of the polyester polyol and the polymeric methylene diphenyl diisocyanate. Such embodiments allow the production of high-quality polyisocyanurate insulation panels in embodiments of the method according to the invention.

Preferably, the liquid polyurethane foam formulation has a viscosity, measured at 25°C, of between 600 and 1000 mPa.s. Such embodiments are advantageous because they further facilitate a full wetting of the foil by the liquid polyurethane foam formulation in the direction transversely to the production direction without interruptions.

Preferably, polymerization in the polyurethane foam does not occur until after entry of the liquid polyurethane foam formulation into the oven.

These embodiments synergistically ensure a better foam formation. This avoids the risk of the foam being crushed at the roller or in the oven, which could cause permanent cracks in the foam. Such cracks can negatively affect the properties of the insulation panel.

Preferably, the liquid polyurethane foam formulation comprises less than 3 norm liters of air, and more preferably at least 1 norm liter of air, and more preferably at least 1.5 norm liters of air, per 100 kg.

The introduction of air - for example, finely distributed - into the liquid polyurethane foam formulation is useful for nucleation of the foam cells. However, the preferred quantities of air ensure that the liquid polyurethane foam formulation can flow together more easily in a transverse direction, since the viscosity of the liquid polyurethane foam formulation is lower due to the previously limited quantities of air. The preferred quantities of air also ensure that at the roller the foam can be easily leveled.

1 norm liter of air refers to the quantity of air in 1 liter at 0 °C and at a pressure of 101325 Pa.

Preferably, the thickness of the polyurethane insulation panel is at least 40 mm, more preferably at least 60 mm, more preferably at least 100 mm; and preferably not more than 250 mm, and more preferably not more than 200 mm.

The speed of the production line is preferably between 10 and 45 meters per minute.

Preferably, in a position where the second foil is guided under the roller and contacts it, the second foil is pressing on the polyurethane foam, wherein this pressing reduces the height of the polyurethane foam at the position of roller. Consequently, a better positioning and distribution of the foam is achieved. This results in better properties of the rigid polyurethane foam.

With a view to better demonstrating the characteristics of the invention, the following, as an example without any restrictive character, describes some preferred embodiments, with reference to the appended drawings, in which:
Figure 1 illustrates a method according to the invention on a continuous production line to produce polyurethane insulation panels;
Figures 2, 3, 4 and 5 show views of parts of the continuous production line of Figure 1;
Figure 6 shows the division of a heated table into sections that can be used in the invention;
Figure 7 shows a detail of a method according to the invention;
Figure 8 illustrates a method according to the invention on a continuous production line to produce polyurethane insulation panels;
Figure 9 shows an example of a spray unit that can be used in the invention;
Figure 10 shows another example of a spray unit that can be used in the invention;
Figure 11 shows another example of a spray unit that can be used in the invention;
Figure 12 shows a polyurethane insulation panel that can be produced according to the method of the invention;
Figure 13 shows an alternative embodiment of the invention in the same view as Figure 3; and
Figure 14 shows an alternative embodiment of the invention in the same view as Figure 4.

The reference signs in the various figures have the same meaning.

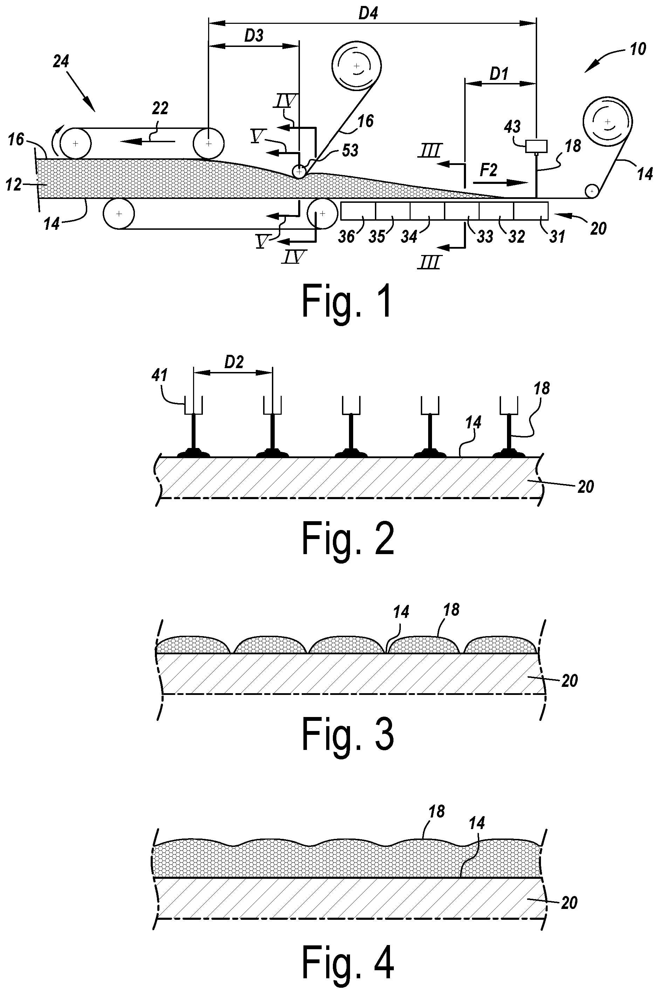

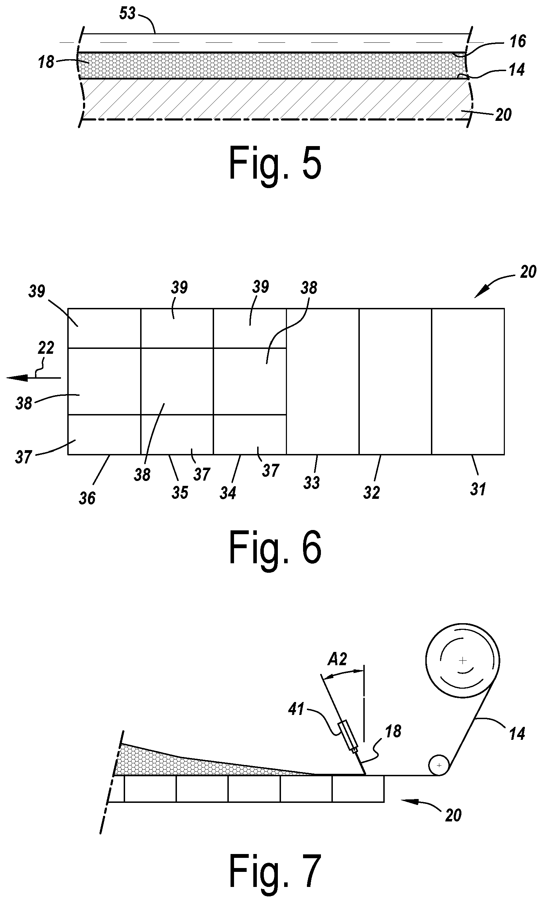

Figure 1 illustrates an example of carrying out the method according to the invention on a continuous production line 10 to produce polyurethane insulation panels. Figure 2 shows the view according to F2 of a part of the continuous production line of Figure 1. Figure 3 shows the view according to III-III of the continuous production line 10 of Figure 1. Figure 4 shows the view according to IV-IV of the continuous production line 10 of Figure 1. Figure 5 shows the view according to V-V of the continuous production line 10 of Figure 1.

Figure 1 shows a continuous production line 10 wherein a liquid polyurethane foam formulation 18 is deposited onto a foil 14 such that, at the position where the liquid polyurethane formulation 18 is deposited on the foil 14, the foil 14 is wetted by discrete quantities of the liquid polyurethane foam formulation 18 in the direction transversely to the production direction. This is illustrated in Figure 2, which shows a view according to F2 of Figure 1.

Only at a distance D1 from the position where the liquid polyurethane formulation 18 is deposited on the foil 14 the discrete quantities will have flown together, in order to wet the foil 14 with the liquid polyurethane foam formulation without interruption in the direction transversely to the production direction. This is illustrated in Figure 3, which shows the view according to III-III of Figure 1. At this distance D1, the various discrete quantities have just flown together. This distance D1 is, for example, 450 mm. This distance D1 can be achieved by selecting the distance D2 between the centers of the nozzles 41 and by adjusting the characteristics of the liquid polyurethane composition, by means of selection and quantities of additives (for example, the selection and quantity of surfactants, the selection of flame-retardant additives that affect viscosity) and the quantity of air which is mixed into the liquid foam formulation. It is therefore preferred that the liquid foam formulation comprises less than 3 norm liters of air, and preferably comprises at least 1 norm liter of air, per 100 kg.

The example of Figure 1 employs a number of spray units 43 positioned across the width of the production line 10. Each of the spray units 43 comprises a discrete number of nozzles 41 from which liquid polyurethane foam formulation flows.

The liquid polyurethane foam formulation therefore flows out of a discrete number of nozzles 41, viewed transversely to the production direction of the polyurethane panel.

In the example, the nozzles are oriented such that the liquid polyurethane foam formulation 18 flows vertically out of the nozzles towards the foil. However, for the invention, this does not necessarily have to be the case.

At the position where the liquid foam formulation 18 is deposited onto the foil, the foil is supported by a heated table 20.

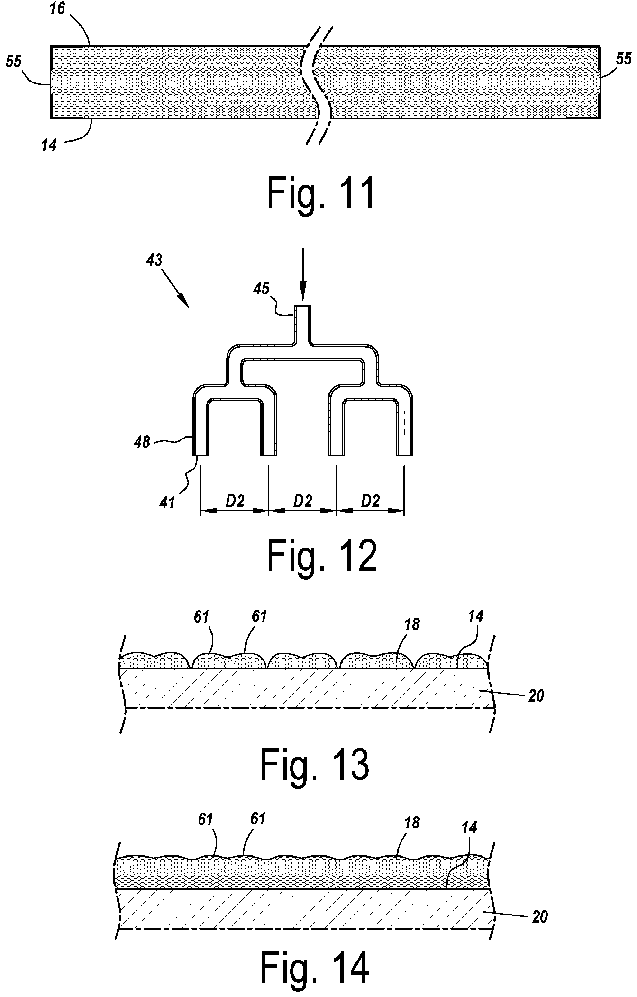

In the example, on both sides of the foil 14 a paper strip is fed in alongside the foil (not shown in Figure 1). On both sides, the paper strip is attached to the foil 14 by means of adhesive tape or using glue (for example, a hot melt adhesive). The paper strips are folded into a vertical position on both sides in the production line, wherein the polyurethane foam will adhere to these vertical paper strips. These paper strips 55 form the side edges of the produced polyurethane insulation panel (see Figure 12).

In the method, the liquid polyurethane foam formulation 18 expands and reacts to form a polyurethane foam 12 bonded to the foil 14.

The foil 14 - with the liquid foam formulation thereon - is continuously fed through production line 10 in production direction 22 of the insulation panel.

At the position where the liquid polyurethane foam formulation 18 is deposited onto the foil 14, the heated table has a temperature of at least 30°C. Depending on the polyurethane foam formulation, this temperature may be, for example, 35°C or 45°C.

In the example shown, the heated table 20 comprises six sections 31, 32, 33, 34, 35, 36 in the production direction 22, wherein the temperatures in these six sections 31, 32, 33, 34, 35, 36 can be adjusted and regulated individually.

After the heated table 20, the foil 14 with the polyurethane foam 18 thereon is guided through an oven by means of and between a double conveyor 24.

In front of the oven, and thus in front of the double conveyor 24 - a second foil 16 is supplied above the foil 14 with the polyurethane foam thereon. The foil 14 with the polyurethane foam thereon and the second foil 16 are guided through the oven by means of and between the double conveyor 24. In the oven, the liquid polyurethane foam formulation expands and reacts further to form a polyurethane foam bonded to and sandwiched between the foil 14 and the second foil 16.

The height position of running in the second foil 16 is determined by guiding the second foil 16 under a roller 53. The height position of the roller 53 can be controlled by means of a control loop as a function of a measurement of the height of the polyurethane foam in front of the position of roller 53.

The height measurement of the foam across the width can preferably be performed by means of an optical measurement, for example by using a laser.

Roller 53 is pressing on the polyurethane foam, wherein this pressing reduces and levels the height of the polyurethane foam at the position of roller 53.

In the example, the roller compresses the polyurethane foam by at least 1 mm - and preferably at least 3 mm - relative to the average height of the polyurethane foam in front of the roller 53.

The polyurethane foam has a wavy surface just in front of the position where the roller 53 is pressing on the polyurethane foam, viewed transversely to the production direction. This is illustrated in Figure 4, which shows a view according to IV-IV of Figure 1 in a position just in front of roller 53.

Beginning from the roller 53, the polyurethane foam contacts the second foil 16 across its entire width. This is illustrated in Figure 5, which shows a view according to V-V of Figure 1, this is the position at roller 53.

After the roller 53 the thickness of the polyurethane foam still increases by at least 35% - and preferably by at least 50% - of the final thickness of the polyurethane foam insulation panel.

In the example, the horizontal distance D3 between the roller and the oven entrance is 17% of the horizontal distance D4 (which in the example is 2500 mm) between the position where the liquid polyurethane formulation is deposited onto the foil and the oven entrance.

In the example of Figure 1, the nozzles 41 are positioned such that the liquid polyurethane foam formulation 18 flows vertically out of the nozzles towards the foil 14. However, for the invention, this does not necessarily have to be the case.

Figure 6 shows an example of the division into sections of heated table 20 of the production line of Figure 1. The heated table 20 of Figure 1 (and as shown in detail in Figure 6) comprises six sections 31, 32, 33, 34, 35, 36 in the production direction. The temperatures in these six sections 31, 32, 33, 34, 35, 36 can be adjusted and regulated to the desired temperature individually. To this end, these sections contain sensors and control loops.

The last three sections 34, 35, 36 in front of the oven of the heated table 20 are each divided into three subsections 37, 38, 39 in the direction transversely to the production direction. These three subsections in each case contain a central section 38 and two edge sections 37, 39. The central section 38 is at least twice as wide as each of the two edge sections 37, 39. The temperature in each of these nine subsections can be adjusted and regulated individually relative to the desired temperature. To this end, each subsection comprises sensors and a control loop.

An example of a temperature adjustment in the successive sections is: 35°C in the first section 31; 35°C in the second section 32; 45°C in the third section 33; 50°C in each subsection 37, 38, 39 of the fourth section 34; 65°C in each subsection 37, 38, 39 of the fifth section 34; and 65°C in each subsection 37, 38, 39 of the sixth section 36. Thus, in the example in each subsection which transversely to the production direction is intersected by the same line, the temperatures are adjusted to be the same. For the invention, this does not necessarily have to be the case.

In the example, the temperatures of each of the three subsections 37, 38, 39 of the last section 36 of the heated table 20 are adjusted to be equal to the temperature of the oven.

Figure 7 shows a detail of a method according to the invention wherein the nozzles 41 are directed upstream and positioned at an angle A2 to the vertical direction, so that the liquid foam formulation 18 is sprayed onto the foil 14 in the direction upstream of the production direction. The angle A2 between the vertical direction and the nozzles 41 is, for example, 25°. Otherwise, the method can be carried out as illustrated in Figure 1.

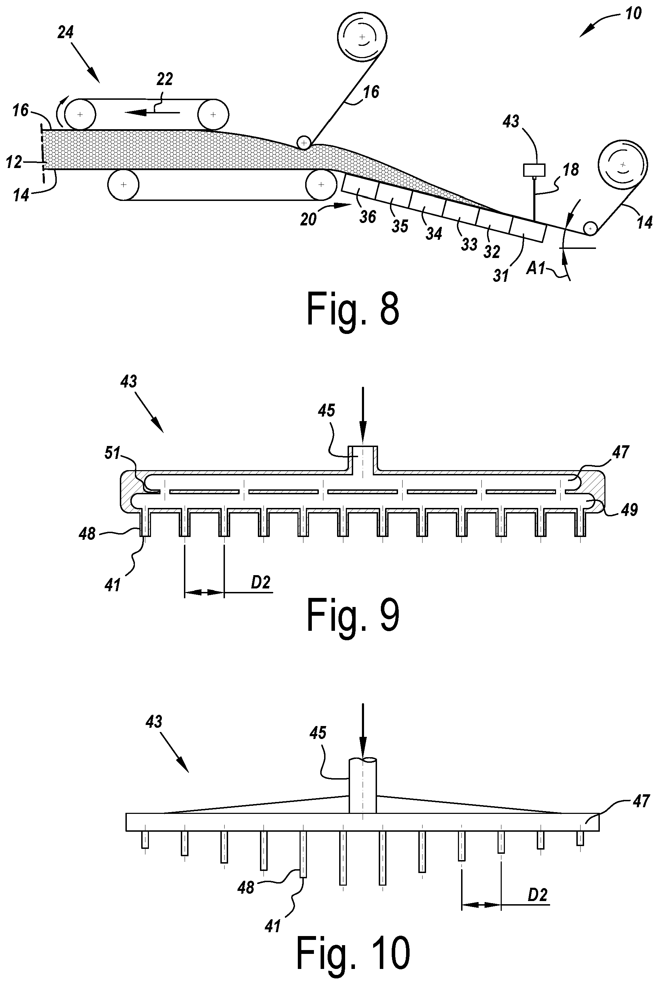

Figure 8 shows an example of a method according to the invention on a continuous production line 10 to produce polyurethane insulation panels. The continuous production line 10 and the method are similar to those of Figure 1, except for the arrangement of the heated table 20. The heated table 20, which supports the foil 14 onto which the liquid polyurethane foam formulation is deposited, is arranged inclined in the production direction. In the example, the angle of inclination A1 is 10°.

Otherwise, the method in the example of Figure 8 can be carried out similarly to the method shown in Figure 1.

Such an arrangement with an inclined table 20 is preferably employed when producing a polyurethane insulation panel thinner than 105 mm.

The reference numbers in Figure 8 have the same meaning as in Figure 1.

The characteristics of the embodiments of Figure 7 and of Figure 8 may be combined.

Figure 9 shows an example of a spray unit 43 that can be used in the invention. A number of these spray units 43 are positioned across the width of the production line.

The spray unit 43 of Figure 9 comprises a central feed channel 45 for feeding in the liquid polyisocyanurate foam formulation. The central feed channel 45 ends in a transverse distribution channel 47.

The spray units 43 of Figure 9 contain a second transverse distribution channel 49. The second transverse distribution channel 49 runs parallel to the transverse distribution channel 47; and is connected thereto through six connection channels 51. The liquid polyurethane foam formulation can flow from the transverse distribution channel 47 through the connection channels 51 into the second transverse distribution channel 49. The six connection channels 51 are positioned transversely with respect to the transverse distribution channel 47. In each case, two connection channels 51 are arranged symmetrically with respect to the central feed channel 45.

The twelve nozzles 41 of the spray unit 43 of Figure 9 are positioned along the length of the second transverse distribution channel 49. Each nozzle 41 is connected to the second transverse distribution channel 49 through a spray channel 48, positioned transversely to the second transverse distribution channel 49. In each case, two spray channels 48 are arranged symmetrically with respect to each connection channel 51.

The twelve nozzles 41 of the example of spray unit 43 of Figure 9 have a circular outflow opening with a diameter of 11 mm. For example, the distance D2 between the centers of any two consecutive nozzles 41 of the spray unit 43 is 100 mm for the production of insulation panels with a thickness of at least 100 mm. For example, the distance D2 between the centers of any two consecutive nozzles 41 of the spray unit 43 is 50 mm for the production of insulation panels with a thickness less than 90 mm.

The spray unit 43 as shown in Figure 9 consists of two plastic injection molded parts glued together.

Spray units 43 as shown in Figure 9 are preferably used to produce polyisocyanurate insulation panels with a thickness of at least 60 mm.

Figure 10 shows another example of a spray unit 43 that can be used in the invention. A number of these spray units 43 can be positioned across the width of the production line.

The spray unit 43 of Figure 10 comprises a central feed channel 45 for feeding in the liquid polyurethane foam formulation. The central feed channel 45 ends in a transverse distribution channel 47 which guides the liquid polyurethane foam formulation to twelve nozzles 41.

The liquid polyurethane foam formulation can flow out of the nozzles 41 transversely to the production direction of the polyurethane panel. This is illustrated in Figure 2.

The spray unit 43 of Figure 10 comprises a number of spray channels 48, positioned transversely to the transverse distribution channel 47. Each nozzle channel 48 is guiding a separate flow of the liquid polyurethane foam formulation from the cross distribution channel 47 to a nozzle 41.

The length of the spray channels 48 decreases from the spray channels ending in a centrally positioned nozzle or the centrally positioned nozzles, to the spray channels 48 ending in the most distal nozzles 41 relative to the central feed channel 45.

The twelve nozzles 41 of the spray unit of Figure 10 have a circular outflow opening.

The spray unit of Figure 10 is composed of plastic injection molded parts.

Spray units 43 as shown in Figure 10 are preferably used for the production of insulation panels with a thickness of 60 mm or less, and for these applications they have a distance D2 of, for example, 50 mm between the centers of every two consecutive nozzles 41 of spray unit 43.

Figure 11 shows another example of a spray unit 43 that can be used in the invention. The spray unit 43 comprises four nozzles 41. For example, the distance D2 between the centers of any two consecutive nozzles 41 of the spray unit 43 is 100 mm for the production of insulation panels with a thickness of at least 100 mm. For example, the distance D2 between the centers of any two consecutive nozzles 41 of the spray unit 43 is 50 mm for the production of insulation panels with a thickness less than 90 mm. A number of these spray units 43 may be positioned across the width of the production line, so that the distance D2 between the centers of every two consecutive nozzles 41 is always the same.

The spray unit 43 of Figure 11 is configured such that the flow distance from the entrance of the spray unit to each nozzle 41 is the same, and wherein the vertical flow of liquid polyurethane foam formulation is divided into two equal flows several times. Such a spray unit may also comprise more than four nozzles.

Figure 12 shows a polyurethane insulation panel - for example, a polyisocyanurate insulation panel - that can be produced according to the method of the invention. The insulation panel comprises a rigid polyurethane foam (for example a rigid polyisocyanurate foam) 12 between two foils 14, 16. The sides are formed by paper strips 55.

These polyurethane - for example polyisocyanurate - insulation panels are produced at full width on a production line as shown in Figures 1 or 8, in the example of Figure 1 at a width of 1200 mm. From these 1200 mm wide insulation panel, insulation panels can then be cut to size as needed.

In an embodiment of the invention the discrete quantities of liquid polyurethane foam formulation can each comprise two bulges 61, at the position where they have just flown together in order to wet the foil 14 with the liquid polyurethane foam formulation in the direction transversely to the production, from a distance D1 from the position of the deposition of the liquid polyurethane formulation 18 onto the foil 14. This is illustrated in Figure 13, which shows the view according to III-III of Figure 1 of such an embodiment of the invention.

Such an embodiment can also result in a configuration of the liquid polyurethane formulation just in front of the roller wherein for each originally deposited discrete quantity of the liquid polyurethane foam formulation also two bulges 61 are formed. This is illustrated in Figure 14, which shows such a configuration in a similar view as in Figure 4.

The present invention is by no means limited to the embodiments described above, but such methods for producing a polyurethane insulation panel can be realized according to different variants without departing from the scope of the present invention.

The invention also relates to the following list of numbered items:
1.- A method for producing a rigid polyurethane foam insulation panel on a production line, wherein the produced insulation panel comprises a rigid polyurethane foam (12) between two foils (14, 16),
   characterized in that the method comprises the step wherein a liquid polyurethane foam formulation (18) is deposited onto a foil (14) such that, at the position where the liquid polyurethane formulation (18) is deposited onto the foil (14), the foil (14) is wetted by discrete quantities of the liquid polyurethane foam formulation (18) in the direction transversely to the production direction;
   wherein the discrete quantities have flown together to wet the foil (14) with the liquid polyurethane foam formulation without interruptions in the direction transversely to the production direction at a distance (D1) from the position of depositing the liquid polyurethane formulation (18) onto the foil (14);
   wherein upstream of an oven a second foil (16) is supplied above the foil (14) with the polyurethane foam thereon, wherein the foil (14) with the polyurethane foam thereon and the second foil (16) are guided through the oven, wherein in the method the liquid polyurethane foam formulation expands and reacts to form a polyurethane foam bonded to and sandwiched between the foil (14) and the second foil (16);
   wherein the height position of running in the second foil (16) is determined by guiding the second foil (16) under a roller (53);
   wherein the roller (53) is pressing on the polyurethane foam, wherein this pressing reduces the height of the polyurethane foam at the position of the roller (53).
2.- The method according to item 1, characterized in that the discrete quantities of liquid polyurethane foam formulation have flown together before reaching the roller (53) in order to wet the foil (14) with the liquid polyurethane foam formulation without interruption in the direction transversely to the production direction.
3.- The method according to items 1 or 2, characterized in that the roller (53) compresses the polyurethane foam by at least 1 mm - and preferably by at least 3 mm, and more preferably by at least 4 mm - relative to the average height of the polyurethane foam in front of the roller.
4.- The method according to any of the preceding items, characterized in that the height position of the roller (53) is controlled by means of a control loop as a function of a measurement of the height of the polyurethane foam in front of the position of the roller.
5.- The method according to any of the preceding items, characterized in that the height measurement is performed across the width by means of an optical measurement, preferably using a laser.
6.- The method according to any of the preceding items, characterized in that after the roller (53) the thickness of the polyurethane foam still increases by at least 35% - and preferably by at least 50% - of the final thickness of the polyurethane foam insulation panel.
7.- The method according to any of the preceding items, characterized in that the polyurethane foam has a wavy surface just in front of the position where the roller (53) is pressing on the polyurethane foam, viewed transversely to the production direction.
8.- The method according to any of the preceding items, characterized in that the foil is supported by a heated table (20) at the position where the liquid polyurethane foam formulation is deposited onto the foil.
9.- The method according to item 8, characterized in that the heated table has a temperature of at least 70°C, and preferably at most 75°C, at the roller (53).
10.- The method according to any of the preceding items, characterized in that from the roller the polyurethane foam contacts the second foil across its entire width.
11.- The method according to any of the preceding items, characterized in that the horizontal distance (D3) between the roller and the oven entrance is less than 25% - and preferably more than 10% - of the horizontal distance (D4) between the position where the liquid polyurethane formulation is deposited onto the foil and the oven entrance.
12.- A method for producing a rigid polyurethane foam insulation panel on a production line, optionally a method according to any of the preceding items, wherein the produced insulation panel comprises a polyurethane foam (12) between two foils (14, 16),
   characterized in that the method comprises the step wherein a liquid polyurethane foam formulation (18) is deposited onto a foil (14) such that, at the position where the liquid polyurethane foam formulation (18) is deposited onto the foil (14), the foil (14) is wetted by discrete quantities of the liquid polyurethane foam formulation (18) in the direction transversely to the production direction;
   wherein the discrete quantities have flown together to wet the foil (14) with the liquid polyurethane foam formulation without interruptions in the direction transversely to the production direction at a distance (D1) from the position of depositing the liquid polyurethane foam formulation (18) onto the foil (14);
   wherein upstream of an oven a second foil (16) is supplied above the foil (14) with the polyurethane foam thereon, wherein the foil (14) with the polyurethane foam thereon and the second foil (16) are guided through the oven, wherein in the method the liquid polyurethane foam formulation expands and reacts to form a polyurethane foam bonded to and sandwiched between the foil (14) and the second foil (16);
   wherein the table supporting the foil (14) onto which the liquid polyurethane foam formulation is deposited, is arranged inclined in the production direction.
13.- The method according to item 12, characterized in that the table supporting the foil (14) is arranged inclined upwardly in the production direction; preferably wherein the angle of inclination (A1) is at least 3°, more preferably is at least 5°, and more preferably is less than 15°.
14.- The method according to items 12 or 13, characterized in that the table supporting the foil (14) is arranged inclined over at least part of the length - and preferably over the entire length - between the position where the liquid polyisocyanurate foam formulation (18) is deposited onto the foil (14) and the oven.
15.- The method according to any of items 12 - 14, characterized in that the table supporting the foil (14) is arranged inclined upwardly in the production direction over at least part of the length - and preferably over the entire length - between the position where the liquid polyisocyanurate foam formulation (18) is deposited onto the foil (14) and the oven.
16.- The method according to any of the preceding items 12 - 15, characterized in that the produced insulation panel is thinner than 105 mm, and preferably is thinner than 80 mm.
17.- A method for producing a rigid polyurethane foam insulation panel on a production line, optionally a method according to any of the preceding items, wherein the produced insulation panel comprises a polyurethane foam (12) between two foils (14, 16),
   characterized in that the method comprises the step wherein a liquid polyurethane foam formulation (18) is deposited onto a foil (14) such that, at the position where the liquid polyurethane foam formulation (18) is deposited onto the foil (14), the foil (14) is wetted by discrete quantities of the liquid polyurethane foam formulation (18) in the direction transversely to the production direction;
   wherein the discrete quantities have flown together to wet the foil (14) with the liquid polyurethane foam formulation without interruptions in the direction transversely to the production direction at a distance (D1) from the position of depositing the liquid polyurethane foam formulation (18) onto the foil (14);
   wherein upstream of an oven a second foil (16) is supplied above the foil (14) with the polyurethane foam thereon, wherein the foil (14) with the polyurethane foam thereon and the second foil (16) are guided through the oven, wherein in the method the liquid polyurethane foam formulation expands and reacts to form a polyurethane foam bonded to and sandwiched between the foil (14) and the second foil (16); wherein the liquid polyurethane foam formulation flows out of a discrete number of nozzles (41), transversely to the production direction of the polyurethane panel, and is deposited onto the foil by them;
   wherein the nozzles are directed upstream and positioned at an angle to the vertical direction, so that the liquid foam formulation (18) is sprayed onto the foil (14) in the direction upstream of the production direction, preferably wherein the angle (A2) of the nozzles with the vertical direction is at least 5°.
18.- The method according to any of the preceding items, characterized in that the distance (D1) from the position of depositing the liquid polyurethane foam formulation (18) onto the foil (14) to the position where the discrete quantities have flown together to wet the foil (14) with the liquid polyurethane foam formulation without interruptions in the direction transversely to the production direction is at least 250 mm, and preferably at least 300 mm, and preferably less than 500 mm.
19.- The method according to any of the preceding items, characterized in that the start of the expansion of the foam does not occur until 0.6 * the distance from the position of depositing the liquid polyurethane foam formulation onto the foil to the position where the discrete quantities have flown together to wet the foil with the liquid polyurethane foam formulation without interruptions in the direction transversely to the production direction.
20.- The method according to any of the preceding items, characterized in that the liquid polyurethane foam formulation flows out of a discrete number of nozzles (41) transversely to the production direction of the polyurethane panel and is deposited onto the foil by them.
21.- The method according to item 20, characterized in that the distance (D2) between the centers of any two consecutive nozzles is at least 85 mm when producing insulation panels with a thickness of at least 100 mm; and/or
   in that the distance D between the centers of any two consecutive nozzles is at least 40 mm and less than 85 mm - and preferably less than 65 mm - when producing insulation panels with a thickness of less than 80 mm.
22.- The method according to items 20 or 21, characterized in that the method employs a number of spray units (43) positioned across the width of the production line to produce the polyurethane insulation panel, each of the spray units (43) comprising a central feed channel (45) for supplying the liquid polyurethane foam formulation; the central feed channel (45) ending in a transverse distribution channel (47) which directs the liquid polyurethane foam formulation to a discrete number of nozzles (41), either indirectly or directly.
23.- The method according to item 22, characterized in that each spray unit (43) comprises a number of spray channels (48), positioned transversely to the transverse distribution channel (47), each spray channel (48) directing a separate flow of the liquid polyurethane foam formulation from the transverse distribution channel (47) to a nozzle (41), with the length of the spray channels (48) decreasing from spray channels ending in a centrally positioned nozzle or the centrally positioned nozzles to the spray channels (48) ending in the most distal nozzles (41) relative to the central feed channel (45).
24.- The method according to item 22, characterized in that each of the spray units (43) comprises a second transverse distribution channel (49), the second transverse distribution channel (49) running parallel to the transverse distribution channel (47) and being connected thereto through a number of connection channels (51), wherein the liquid polyurethane foam formulation can flow from the transverse distribution channel (47) into the second transverse distribution channel (49) through the connection channels (51), the connection channels (51) being positioned transversely relative to the transverse distribution channel (47), wherein the discrete number of nozzles (41) are positioned along the length of the second transverse distribution channel (49), each nozzle (41) being connected to the second transverse distribution channel (49) through a spray channel (48), positioned transversely to the second transverse distribution channel (49), wherein in each case two spray channels (48) are arranged symmetrically with respect to each connection channel (51).
25.- The method according to item 24, characterized in that in each case two connection channels (51) are arranged symmetrically with respect to the central feed channel (45).
26.- The method according to any of the preceding items 20 - 25, characterized in that the nozzles (41) have a circular outflow opening; or in that the nozzles (41) have an oval outflow opening, preferably with the largest dimension in the direction perpendicular to the production direction.
27.- The method according to any of the preceding items, characterized in that the foil is supported by a heated table (20) at the position where the liquid foam formulation is deposited onto the foil.
28.- The method according to item 27, characterized in that the heated table has a temperature of at least 30°C and preferably of less than 50°C, and more preferably of at least 40°C at the position where the liquid polyisocyanurate foam formulation (18) is deposited onto the foil (14).
29.- The method according to items 27 - 28, characterized in that the heated table (20) comprises at least three sections (31, 32, 33, 34, 35, 36) - and preferably at least five, and more preferably at least six sections - in the production direction, wherein the temperature in these sections (31, 32, 33, 34, 35, 36) can be adjusted individually.
30.- The method according to item 29, characterized in that the method uses sensors and control loops to measure the temperature in each of these sections (31, 32, 33, 34, 35, 36) and to control it relative to the desired temperature in the respective section.
31.- The method according to any of the preceding items 29 - 30, characterized in that the temperature of these sections is adjusted to increase in the production direction, preferably wherein the temperature is adjusted to increase over at least four, and preferably over at least five sections.
32.- The method according to item 31, characterized in that the temperature in the last section (36) of the heated table (20) is less than 5°C lower than the temperature in the oven; preferably wherein the temperature in the last section (36) of the heated table (20) is higher than 70°C and lower than 85°C, and preferably is higher than 73°C.
33.- The method according to item 32, characterized in that the temperature in the last section (36) of the heated table (20) is adjusted to be equal to the temperature in the oven.
34.- The method according to any of the preceding items 27 - 33, characterized in that the last section (36) of the heated table (20) in front of the oven comprises three subsections (37, 38, 39) in the direction transversely to the production direction, wherein the temperature in each of these subsections can be adjusted individually.
35.- The method according to any of the preceding items 29 - 34, characterized in that at least the last three sections (34, 35, 36) of the heated table in front of the oven each comprise three subsections (37, 38, 39) in the direction transversely to the production direction, wherein the temperature in each of these subsections can be adjusted individually and regulated individually.
36.- The method according to any of the preceding items 34 - 35, characterized in that these three sections comprise a central section (38) and two edge sections (37, 39), the central section being at least twice as wide as each of the two edge sections.
37.- The method according to any of the preceding items 34 - 36, characterized in that the method uses sensors and control loops to measure the temperature in each of the three subsections and to regulate it relative to the desired temperature.
38.- The method according to any of the preceding items 34 - 37, characterized in that temperatures in all subsections which transversely to the production direction are intersected by the same line, are adjusted to be the same.
39.- The method according to any of the preceding items, characterized in that the discrete quantities each form two bulges (61) at the position where the discrete quantities have flown together in order to wet the foil (14) with the liquid polyurethane foam formulation without interruption in the direction transversely to the production direction.
40.- The method according to item 39, characterized in that the height position of running in the second foil (16) is determined by guiding the second foil (16) under a roller (53); the roller (53) pressing on the polyurethane foam, wherein this pressing reduces the height of the polyurethane foam at the position of the roller (53); wherein there are, just in front of the roller, two bulges (61) for each originally deposited discrete quantity of the liquid polyurethane foam formulation.
41.- The method according to any of the preceding items, characterized in that the foil (14) with the polyurethane foam thereon and the second foil (16) are guided through the oven by means of and between a double conveyor (24).
42.- The method according to any of the preceding items, characterized in that on both sides of the foil (14) a paper strip (55) is fed in alongside the foil, wherein the paper strip (55) is attached to the foil (14) on both sides by means of adhesive tape or glue, wherein in the method the paper strips (55) on both sides are folded into a vertical position, wherein the polyurethane foam will adhere to these vertically oriented paper strips, and wherein these paper strips (55) are forming the side edges of the produced polyurethane insulation panel.
43.- The method according to any of the preceding items 1 - 42, characterized in that the foil (14) is or comprises an aluminum sheet - either coated or not coated -, preferably wherein the sheet of aluminum has a thickness of more than 40 micrometers, and preferably of less than 75 micrometers, more preferably of less than 60 micrometers.
44.- The method according to any of the preceding items 1 - 42, characterized in that the foil (14) is a laminate, the laminate comprising:
   - a plastic film - preferably on the outer side of the laminate and preferably to form the outer surface of the insulation panel -;
   - one or more aluminum sheets, each aluminum sheet being at least 5 micrometers thick, and preferably being less than 20 micrometers thick; and
   - one or more layers of paper, preferably layers of Kraft paper.
45.- The method according to any of the preceding items, characterized in that the liquid polyurethane foam formulation comprises at least
   - a polyol, preferably wherein the polyol has a functionality of at least 2;
   - a diisocyanate;
   - a blowing agent, the blowing agent comprising water and an additional blowing agent, for example pentane;
   - a surfactant, for example a silicone surfactant and/or a non-silicone surfactant;
   - a catalyst;
   - optionally additives, for example flame retardant additives.
46.- The method according to any of the preceding items, characterized in that the method is a method for producing a polyisocyanurate foam insulation panel and in that the liquid polyurethane foam formulation (18) is a liquid polyisocyanurate foam formulation.
47.- The method according to item 46, characterized in that the liquid polyisocyanurate formulation comprises at least:
   - a polyester polyol, preferably wherein the polyester polyol has a hydroxyl number between 150 and 600 mg KOH/gram and a functionality of at least 2;
   - polymeric methylene diphenyl diisocyanate (pMDI);
   - a blowing agent, the blowing agent comprising water and an additional blowing agent, for example pentane;
   - a surfactant, for example a silicone surfactant and/or a non-silicone surfactant;
   - a catalyst;
   - optionally additives, for example flame retardant additives;
   wherein the mass ratio of the polymeric methylene diphenyl diisocyanate to the polyester polyol is at least 1.9.
48.- The method according to item 47, characterized in that at least 85 weight percent - and preferably at least 90 weight percent - of the liquid polyisocyanurate foam formulation is comprised of the combination of the polyester polyol and the polymeric methylene diphenyl diisocyanate.
49.- The method according to any of the preceding items, characterized in that the liquid polyurethane foam formulation (18) has a viscosity, measured at 25°C, of between 600 and 1000 mPa.s.
50.- The method according to any of the preceding items, characterized in that polymerization in the polyurethane foam does not occur until after entry of the liquid polyurethane foam formulation into the oven.
51.- The method according to any of the preceding items, characterized in that the liquid foam formulation comprises less than 3 norm liters of air, and preferably comprises at least 1 norm liter of air, and more preferably comprises at least 1.5 norm liters of air, per 100 kg.
52.- The method according to any of the preceding items, characterized in that the thickness of the polyurethane insulation panel is at least 40 mm, preferably at least 60 mm, more preferably at least 100 mm and preferably not more than 250 mm, and more preferably not more than 200 mm.
53.- The method according to any of the preceding items, characterized in that the speed of the production line is between 10 and 45 meters per minute.
54.- The method according to any of the preceding items, characterized in that in a position where the second foil (16) is guided under the roller (53) and contacts it, the second foil (16) is pressing on the polyurethane foam, wherein this pressing reduces the height of the polyurethane foam at the position of roller (53).

## Claims

1. A method for producing a rigid polyurethane foam insulation panel on a production line, wherein the produced insulation panel comprises a rigid polyurethane foam (12) between two foils (14, 16),
**characterized in that** the method comprises the step wherein a liquid polyurethane foam formulation (18) is deposited onto a foil (14) such that, at the position where the liquid polyurethane formulation (18) is deposited onto the foil (14), the foil (14) is wetted by discrete quantities of the liquid polyurethane foam formulation (18) in the direction transversely to the production direction;
wherein the discrete quantities have flown together to wet the foil (14) with the liquid polyurethane foam formulation without interruptions in the direction transversely to the production direction at a distance (D1) from the position of depositing the liquid polyurethane formulation (18) onto the foil (14);
wherein upstream of an oven a second foil (16) is supplied above the foil (14) with the polyurethane foam thereon, wherein the foil (14) with the polyurethane foam thereon and the second foil (16) are guided through the oven, wherein in the method the liquid polyurethane foam formulation expands and reacts to form a polyurethane foam bonded to and sandwiched between the foil (14) and the second foil (16);
wherein the height position of running in the second foil (16) is determined by guiding the second foil (16) under a roller (53);
wherein the roller (53) is pressing on the polyurethane foam, wherein this pressing reduces the height of the polyurethane foam at the position of the roller (53).

2. The method according to claim 1, **characterized in that** the discrete quantities of liquid polyurethane foam formulation have flown together before reaching the roller (53) in order to wet the foil (14) with the liquid polyurethane foam formulation without interruption in the direction transversely to the production direction.

3. The method according to claims 1 or 2, **characterized in that** the roller (53) compresses the polyurethane foam by at least 1 mm - and preferably by at least 3 mm, and more preferably by at least 4 mm - relative to the average height of the polyurethane foam in front of the roller.

4. The method according to any of the preceding claims, **characterized in that** the height position of the roller (53) is controlled by means of a control loop as a function of a measurement of the height of the polyurethane foam in front of the position of the roller.

5. The method according to any of the preceding claims, **characterized in that** after the roller (53) the thickness of the polyurethane foam still increases by at least 35% - and preferably by at least 50% - of the final thickness of the polyurethane foam insulation panel.

6. The method according to any of the preceding claims, **characterized in that** the foil is supported by a heated table (20) at the position where the liquid polyurethane foam formulation is deposited onto the foil.

7. The method according to any of the preceding claims, **characterized in that** from the roller the polyurethane foam contacts the second foil across its entire width.

8. The method according to any of the preceding claims, **characterized in that** the horizontal distance (D3) between the roller and the oven entrance is less than 25% - and preferably more than 10% - of the horizontal distance (D4) between the position where the liquid polyurethane formulation is deposited onto the foil and the oven entrance.

9. A method for producing a rigid polyurethane foam insulation panel on a production line, optionally a method according to any of the preceding claims, wherein the produced insulation panel comprises a polyurethane foam (12) between two foils (14, 16),
**characterized in that** the method comprises the step wherein a liquid polyurethane foam formulation (18) is deposited onto a foil (14) such that, at the position where the liquid polyurethane foam formulation (18) is deposited onto the foil (14), the foil (14) is wetted by discrete quantities of the liquid polyurethane foam formulation (18) in the direction transversely to the production direction;
wherein the discrete quantities have flown together to wet the foil (14) with the liquid polyurethane foam formulation without interruptions in the direction transversely to the production direction at a distance (D1) from the position of depositing the liquid polyurethane foam formulation (18) onto the foil (14);
wherein upstream of an oven a second foil (16) is supplied above the foil (14) with the polyurethane foam thereon, wherein the foil (14) with the polyurethane foam thereon and the second foil (16) are guided through the oven, wherein in the method the liquid polyurethane foam formulation expands and reacts to form a polyurethane foam bonded to and sandwiched between the foil (14) and the second foil (16);
wherein the table supporting the foil (14) onto which the liquid polyurethane foam formulation is deposited, is arranged inclined in the production direction.

10. A method for producing a rigid polyurethane foam insulation panel on a production line, optionally a method according to any of the preceding claims, wherein the produced insulation panel comprises a polyurethane foam (12) between two foils (14, 16),
**characterized in that** the method comprises the step wherein a liquid polyurethane foam formulation (18) is deposited onto a foil (14) such that, at the position where the liquid polyurethane foam formulation (18) is deposited onto the foil (14), the foil (14) is wetted by discrete quantities of the liquid polyurethane foam formulation (18) in the direction transversely to the production direction;
wherein the discrete quantities have flown together to wet the foil (14) with the liquid polyurethane foam formulation without interruptions in the direction transversely to the production direction at a distance (D1) from the position of depositing the liquid polyurethane foam formulation (18) onto the foil (14);
wherein upstream of an oven a second foil (16) is supplied above the foil (14) with the polyurethane foam thereon, wherein the foil (14) with the polyurethane foam thereon and the second foil (16) are guided through the oven, wherein in the method the liquid polyurethane foam formulation expands and reacts to form a polyurethane foam bonded to and sandwiched between the foil (14) and the second foil (16);
wherein the liquid polyurethane foam formulation flows out of a discrete number of nozzles (41), transversely to the production direction of the polyurethane panel, and is deposited onto the foil by them;
wherein the nozzles are directed upstream and positioned at an angle to the vertical direction, so that the liquid foam formulation (18) is sprayed onto the foil (14) in the direction upstream of the production direction, preferably wherein the angle (A2) of the nozzles with the vertical direction is at least 5°.

11. The method according to any of the preceding claims, **characterized in that** the distance (D1) from the position of depositing the liquid polyurethane foam formulation (18) onto the foil (14) to the position where the discrete quantities have flown together to wet the foil (14) with the liquid polyurethane foam formulation without interruptions in the direction transversely to the production direction is at least 250 mm, and preferably at least 300 mm, and preferably less than 500 mm.

12. The method according to any of the preceding claims, **characterized in that** the start of the expansion of the foam does not occur until 0.6 * the distance from the position of depositing the liquid polyurethane foam formulation onto the foil to the position where the discrete quantities have flown together to wet the foil with the liquid polyurethane foam formulation without interruptions in the direction transversely to the production direction.

13. The method according to any of the preceding claims, **characterized in that** the liquid polyurethane foam formulation flows out of a discrete number of nozzles (41) transversely to the production direction of the polyurethane panel and is deposited onto the foil by them.

14. The method according to any of the preceding claims, **characterized in that** the discrete quantities each form two bulges (61) at the position where the discrete quantities have flown together in order to wet the foil (14) with the liquid polyurethane foam formulation without interruption in the direction transversely to the production direction.

15. The method according to claim 14, **characterized in that** the height position of running in the second foil (16) is determined by guiding the second foil (16) under a roller (53); the roller (53) pressing on the polyurethane foam, wherein this pressing reduces the height of the polyurethane foam at the position of the roller (53); wherein there are, just in front of the roller, two bulges (61) for each originally deposited discrete quantity of the liquid polyurethane foam formulation.
